Europäisches Patentamt

European Patent Office

Office européen des brevets

(19)

(11) Numéro de publication : **0 365 381 B1**

(12) **FASCICULE DE BREVET EUROPEEN**

(45) Date de publication du fascicule du brevet :
**29.07.92 Bulletin 92/31**

(21) Numéro de dépôt : **89402641.8**

(22) Date de dépôt : **27.09.89**

(51) Int. Cl.⁵ : **B23D 53/04, B23D 55/02, B23D 55/04**

(54) **Machine à scier à ruban horizontal.**

(30) Priorité : **17.10.88 FR 8813631**

(43) Date de publication de la demande :
**25.04.90 Bulletin 90/17**

(45) Mention de la délivrance du brevet :
**29.07.92 Bulletin 92/31**

(84) Etats contractants désignés :
**DE ES GB SE**

(56) Documents cités :
**DE-C- 364 560**
**GB-A- 513 807**
**US-A- 2 898 669**

(56) Documents cités :
**US-A- 3 485 123**
**PATENT ABSTRACTS OF JAPAN, vol. 7, no. 12 (M-186)[1157], 19 janvier 1983, page 23 M 186; & JP-A-57 168 824 (AMANDA K.K.)18-10-1982**

(73) Titulaire : **Missler, Patrick**
**12, rue de Tournehem**
**F-91450 Etioles (FR)**

(72) Inventeur : **Missler, Patrick**
**12, rue de Tournehem**
**F-91450 Etioles (FR)**

(74) Mandataire : **Tony-Durand, Serge et al**
**Cabinet Tony-Durand 77, rue Boissière**
**F-75116 Paris (FR)**

EP 0 365 381 B1

## Description

La présente invention concerne les machines à scier qui sont destinées à être employées pour scier des pièces métalliques, telles que des barres en métal ou similaires.

Les machines de ce genre dont la technique est actuellement la meilleure sont celles dites "à ruban horizontal". Il s'agit de machines comportant un ensemble de travail monté mobile dans le sens vertical au dessus de la table de réception de la pièce à scier. Cet ensemble mobile comprend deux parties latérales distinctes, situées de part et d'autre de deux éléments verticaux de guidage, et qui servent de supports à deux volants verticaux d'entraînement et de renvoi du ruban de scie. Celui-ci étant fermé sur lui-même, il comporte deux brins horizontaux s'étendant entre ces volants, et dont l'un constitue le brin de travail de ce ruban.

Dans les machines actuelles de ce type, les éléments verticaux de guidage de l'ensemble mobile de travail consistent en deux colonnes dont le pied est fixé sur la table de travail. Quant au châssis de l'ensemble mobile de travail, il comporte des manchons qui sont montés coulissants sur ces colonnes. Cependant les deux parties latérales de cet ensemble mobiles ne sont solidarisées entre elles que dans le haut, de façon à dégager un espace libre suffisant pour y permettre l'engagement de la pièce à scier, au fur et à mesure de la descente de cet ensemble mobile.

Ceci constitue donc un grave inconvénient, car le châssis de l'ensemble de travail est soumis à des efforts importants de compression dans le sens horizontal, lesquels sont dûs à la forte tension du ruban de scie (entre 2 et 6 tonnes suivant la section du ruban). Ces efforts tendent donc à provoquer la déformation du châssis de cet ensemble et cette déformation est encaissée par les paliers des colonnes verticales de guidage.

Or ces dernières sont montées "en l'air", car elles ne sont fixées qu'à leur pied sur la table correspondante, leurs extrémités supérieures étant libres l'une par rapport à l'autre. Par ailleurs, les zones de guidage de l'ensemble mobile de travail se trouvent au-dessus de la position du brin de travail du ruban de scie.

Ces inconvénients ne peuvent être paliés qu'en réalisant une construction très rigide pour éviter les risques de déformation de l'ensemble mobile de travail et des colonnes verticales de guidage. Ceci entraine la réalisation de pièces extrêmement lourdes et un usinage très précis. Il en résulte donc un prix de revient particulièrement élevé des machines de ce type.

De plus, ces machines présentent un certain nombre d'inconvénients qui résultent également de leur conception actuelle. Ces inconvénients sont les suivants :

a) Le cylindre hydraulique commandant les déplacements verticaux de l'ensemble de travail doit être obligatoirement déporté par rapport à l'axe de symétrie de cet ensemble afin de laisser libre l'emplacement prévu pour les pièces à scier.

b) Il est nécessaire de réaliser un graissage efficace des paliers des colonnes de guidage pour obtenir un bon fonctionnement.

c) Les glissières de l'étau de serrage se trouvent placées dans les copeaux et le lubrifiant de coupe, et ce en raison du fait que ces glissières sont montées sur la table de réception située au-dessous du brin de travail du ruban de scie.

d) En raison de l'encombrement de l'ensemble mobile qui se trouve au-dessus du brin de travail du ruban, il est difficile de prévoir l'adjonction d'un système de serrage vertical pour la coupe de paquet de barres.

On connaît du US-A-2 898 669 une machine à scier qui peut dans une certaine mesure remédier au dernier des inconvénients énumérés ci-dessus. Dans cette machine, les deux parties latérales distinctes sont montées coulissantes sur des colonnes verticales dont l'extrémité inférieure est fixée au bâti de la machine. Les parties latérales sont reliées l'une à l'autre par une traverse s'étendant en dessous de la table de travail, ce qui permet de rendre cette machine plus compacte.

Le déplacement des parties latérales est commandé à l'aide de vérins hydrauliques disposés de part et d'autre de l'ensemble mobile de travail. Afin d'éviter le coincement de celui-ci, la machine comporte en outre une barre de torsion s'étendant dans un plan inférieure au plan de la table de travail et qui à ses extrémités porte des bielles de liaison reliant l'une à l'autre les deux pièces latérales.

La présente invention a pour objet une machine à scier à ruban horizontal dont la conception est différente à celle du US-A- 2 898 669 de façon à permettre une construction plus simple et encore plus légère, donc moins onéreuse, et à éliminer les divers autres inconvénients rappelés ci-dessus.

A cet effet, la machine à scier selon l'invention est essentiellement caractérisée en ce que :

– les colonnes font partie de cet ensemble mobile et chaque colonne coulisse dans deux paliers reliés l'un à l'autre par un fourreau dont le pied est fixé sur la table de travail,

– la première traverse horizontale est solidarisées avec les extrémités inférieures des colonnes,

– une deuxième traverse horizontale reliant l'une à l'autre les deux parties latérales de l'ensemble mobile de travail est solidarisée avec les extrémités supérieures des colonnes, de façon que le châssis de cet ensemble constitue un premier cadre fermé.

Dans ces conditions, ce châssis peut être réalisé sous forme d'une construction légère car il est en mesure d'encaisser sans déformation les efforts importants dûs à la tension du ruban de scie. Pour la même raison, les fourreaux verticaux de guidage et leurs éléments de fixation peuvent être réalisés de façon beaucoup plus légère que précédemment étant donné qu'ils ne sont plus soumis à des efforts transmis par le châssis de l'ensemble mobile de travail.

Du reste, selon une autre caractéristique de la présente machine, les extrémités supérieures des fourreaux verticaux de guidage sont elles-mêmes solidarisées par une traverse horizontale fixe. Ceci permet donc une construction très rigide.

Suivant une autre caractéristique de la présente machine, la traverse ainsi prévue entre les extrémités supérieures des fourreaux verticaux de guidage, sert de support aux glissières des extrémités supérieures des mâchoires de l'étau d'immobilisation de la pièce à scier, les extrémités inférieures de ces mâchoires étant libres. Ceci correspond à l'inversion du mode habituel de montage de telles mâchoires, et cette inversion permet d'éviter que les glissières de l'étau se trouvent dans les copeaux et le lubrifiant de coupe.

Selon une autre caractéristique encore de la présente machine, l'agencement est tel que ce soit le brin supérieur horizontal du ruban de scie qui constitue le brin de travail de celui-ci, le brin horizontal de renvoi étant disposé au-dessous de la table de réception de la pièce à scier. Ceci a pour avantage de permettre un abaissement de l'ensemble mobile de travail, de sorte que les zones de guidage à l'intérieur des fourreaux verticaux se trouvent à peu près au niveau du brin de travail du ruban de scie, et non pas nettement au-dessus de celui-ci.

Cependant d'autres particularités et avantages de la machine à scier selon l'invention apparaitront au cours de la description suivante d'un exemple de réalisation de celle-ci. Cette description est donnée en référence au dessin annexé à simple titre indicatif, et sur lequel :

La figure 1 est une vue en élévation de face d'une machine à scier selon l'invention.

La figure 2 en est une vue en élévation de côté.

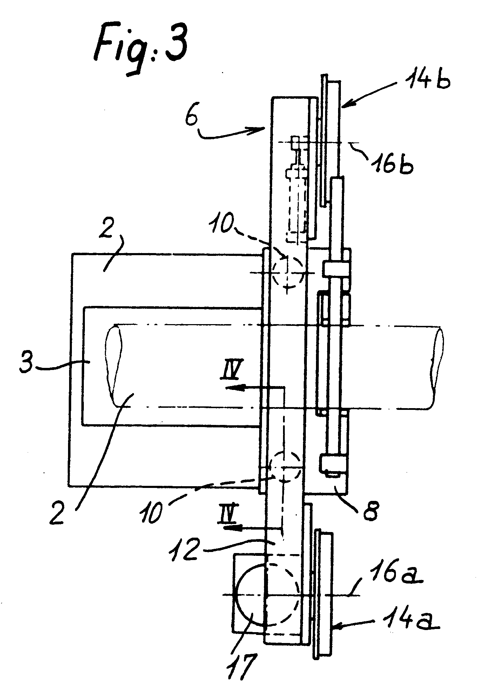

La figure 3 en est une vue en plan de dessus.

La figure 4 est une vue partielle en coupe selon la ligne IV-IV de la figure 3, et ce à échelle différente.

La figure 5 est une vue en plan de dessus d'un détail particulier de la présente machine.

La machine représentée comporte une table fixe 1 destinée à recevoir la pièce à scier, par exemple une barre de métal 2 posée sur une semelle intermédiaire 3. Le plateau de cette table est supporté par des pieds 4 et à l'une de ses extrémités 5 il fait saillie en porte à faux au-delà de ceux-ci.

Au dessus de cette extrémité il est prévu un ensemble de travail désigné par la référence générale 5 et qui est monté mobile dans le sens vertical.

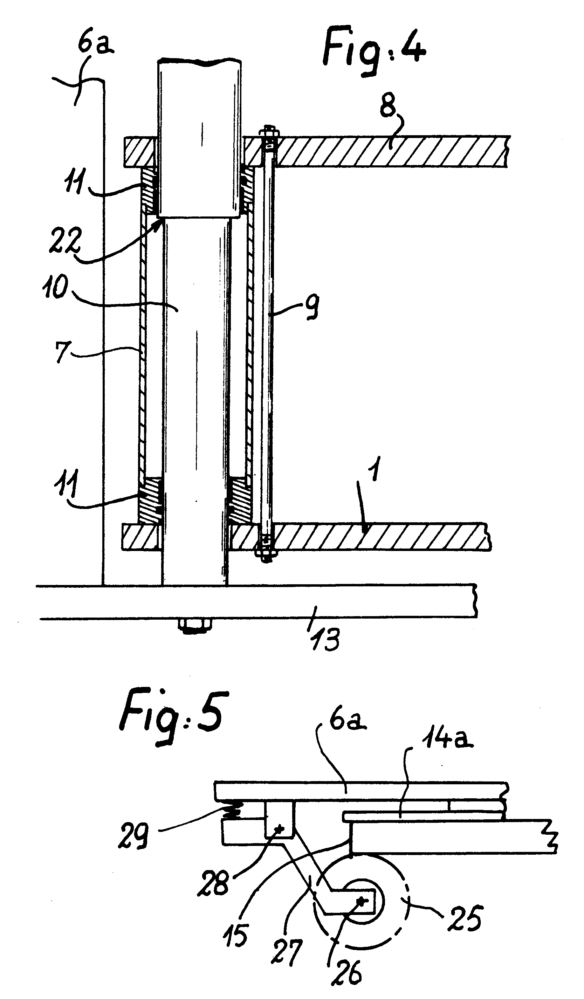

Les éléments de guidage de cet ensemble consistent en deux fourreaux verticaux 7 fixés à leur pied sur la table 1, et ce de part et d'autre de l'emplacement prévu pour la pièce à scier 2. Quant aux extrémités supérieures de ces deux fourreaux, elles sont reliées l'une à l'autre par une traverse horizontale 8. La solidarisation de ces diverses pièces peut être assurée au moyen d'une série de tirants verticaux 9 comme représenté sur la figure 4.

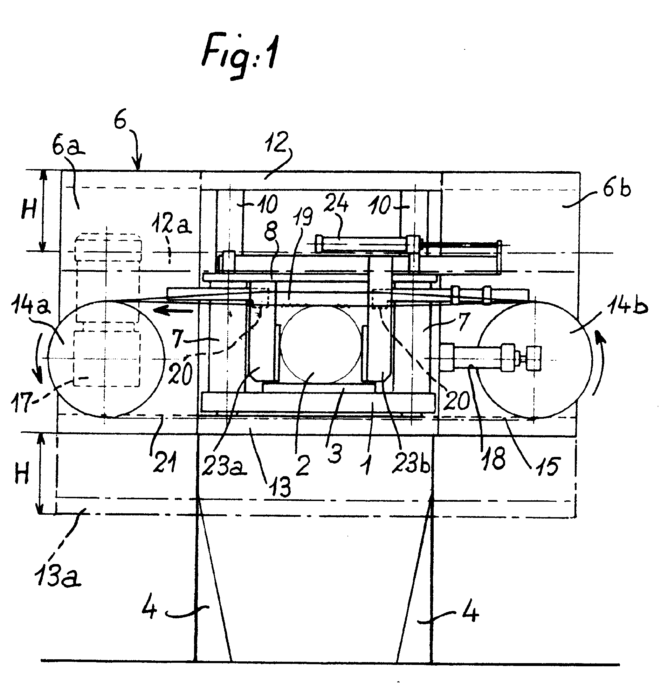

Le guidage de l'ensemble mobile 6 par les fourreaux verticaux 7 est assuré par l'intermédiaire de deux colonnes verticales 10 faisant partie de cet ensemble et qui sont montées coulissantes à l'intérieur des paliers 11 prévus à l'une et l'autre extrémités de ces fourreaux. Les extrémités supérieure et inférieure de ces colonnes sont fixées sur deux traverses horizontales 12 et 13, situées l'une dans le haut et l'autre dans le bas. Ces deux traverses relient l'une à l'autre les deux parties latérales 6a et 6b de cet ensemble mobile, qui servent de supports respectivement au volant d'entraînement 14a et au volant de renvoi 14b du ruban 15 de scie. Ainsi, l'ensemble mobile 6 comporte un châssis constituant un cadre fermé. Il convient de noter que la traverse horizontale inférieure 13 de ce châssis est située au-dessous de la table de travail 1 (voir figures 1 et 4).

Les deux volants 14a et 14b sont disposés dans un même plan vertical et ils sont montés rotatifs autour de deux axes horizontaux 16a et 16b. Le premier de ces deux volants est entraîné par un moteur 17. En ce qui concerne le second, les paliers de son axe de rotation sont montés sur des glissières horizontales et il est prévu un vérin 18 permettant d'assurer la tension voulue du ruban de scie.

Selon une autre particularité de la présente machine, l'agencement est tel que le brin horizontal supérieur 19 du ruban de scie constitue le brin de travail de celui-ci. A cet effet il est prévu, de part et d'autre de la zone de travail de ce brin, des guides 20 aptes à redresser la zone correspondante de celui-ci dans une position horizontale. Quant au brin inférieur 21 du ruban de scie, il s'étend à plat au-dessous de la table de travail 1 pour constituer le brin de retour de ce ruban.

Grâce à cet agencement, l'ensemble mobile de travail 6 se trouve situé à un niveau beaucoup plus bas que dans les machines inférieures de conception classique. Dans ces conditions, les zones de guidage de cet ensemble mobile dans les paliers des fourreaux verticaux 7 se trouvent elles-mêmes situées à peu près au niveau du brin de travail 19 du ruban de scie, ce qui constitue une solution optimum au point de vue mécanique.

Dans la position de départ la plus haute de l'ensemble mobile de travail 6, position représentée en traits pleins sur la figure 1, la traverse inférieure 13 se trouve située immédiatement au-dessous du plateau 1 de la table de travail. Quant à la traverse supérieure 12, elle est alors écartée d'une distance H au-dessus de la traverse 8 reliant les deux fourreaux verticaux de guidage 7. Cette distance H correspond à la course de l'ensemble mobile de travail pendant le fonctionnement de la présente machine, les positions inférieures 12a et 13a des deux traverses 12 et 13 étant représentées en traits mixtes sur la figure 1.

Comme représenté sur la figure 4, les colonnes verticales 10, faisant partie de l'ensemble mobile 6, comportent avantageusement un épaulement 22 dans leur partie qui est toujours située à l'intérieur des fourreaux de guidage 7. Ainsi ces derniers peuvent servir de vérins hydrauliques pour le relèvement de l'ensemble mobile 6 après achèvement de sa descente, les portions correspondantes des colonnes 10 jouant le rôle de pistons. A cet effet, les fourreaux 7 sont remplis d'huile et raccordés par un circuit approprié à une pompe de refoulement commandant le relèvement. Ce circuit comporte un clapet limiteur de débit (non représenté) controlant la descente de l'ensemble mobile lors d'une opération de sciage. Bien entendu ce circuit peut également être raccordé à des dispositifs de sécurité, tels que ceux décrits dans les deux demandes de brevet FR 83.19832 et 87.14438.

Ainsi les fourreaux de guidage 7 et les colonnes verticales correspondantes 10 constituent des vérins hydrauliques pour la remontée de l'ensemble mobile de travail et le freinage de sa descente. Par ailleurs, cette solution a également pour avantage d'assurer une lubrification automatique des colonnes verticales 10 par l'huile contenue à l'intérieur des fourreaux de guidage 7.

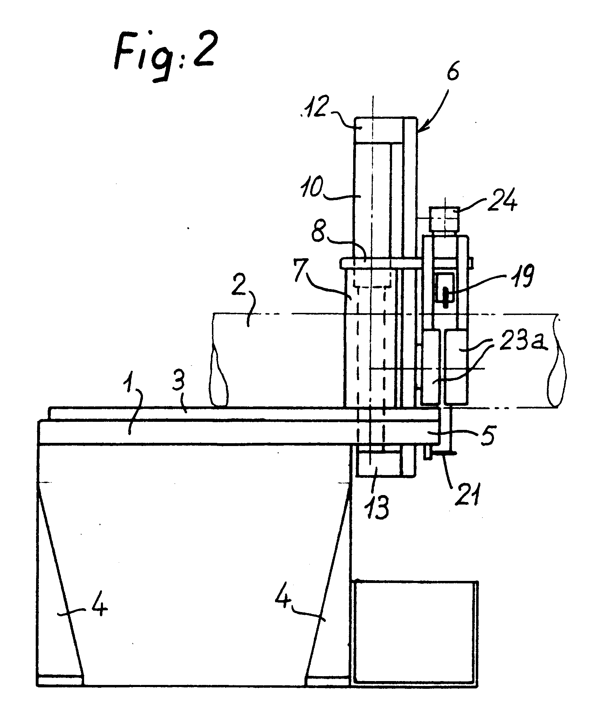

Comme il ressort des figures 1 et 2, la traverse horizontale 8, reliant les extrémités supérieures des deux fourreaux 7, est constituée par une plaque servant de support à l'extrémité supérieure des mâchoires 23a et 23b de l'étau destiné à assurer l'immobilisation en place de la pièce à scier 2, les extrémités inférieures de ces mâchoires étant libres. Ceci correspond à l'inversion du mode habituel de montage de telles mâchoires sur une machine à scier à ruban horizontal. Les mâchoires 23a situées d'un côté peuvent être fixes, cependant que les mâchoires 23b du côté opposé sont montées coulissantes dans le sens transversal pour être actionnées par un vérin 24 permettant de les serrer contre la pièce à scier.

L'inversion du mode de montage des mâchoires de l'étau a pour avantage que les glisières de réglage travaillent dans un environnement plus propre puisqu'elles ne se trouvent plus situées dans les copeaux et le lubrifiant de coupe. Par ailleurs ces glisières peuvent avoir une plus grande longueur, ce qui permet un meilleur guidage. D'autre part, le jeu fonctionnel de l'étau a ainsi tendance à plaquer la pièce à scier 2 sur la table de travail 1 et non pas à la soulever, comme cela est le cas dans les machines de conception classique.

Cependant le principal avantage de la machine selon l'invention réside dans le fait que le châssis de son ensemble mobile de travail 6 est constitué par un cadre fermé comportant des traverses haute et basse. Ainsi ce châssis peut encaisser, sans risque de déformation, les efforts importants auxquels il est soumis et qui sont dûs à la tension du ruban de scie. En conséquence, ce châssis peut être construit de façon beaucoup plus légère que dans les machines de conception classique. De plus, comme les éléments fixes de guidage portés par la table de travail, en l'occurrence les fourreaux verticaux 7, ne sont plus soumis à des efforts provenant du châssis de l'ensemble mobile de travail, ces éléments de guidage peuvent eux-mêmes être réalisés de façon beaucoup plus légère et il en est de même pour les organes assurant leur fixation sur la table de travail. En conséquence, tout ceci concourt à permettre une construction beaucoup plus légère de la présente machine, et par suite à une réduction de son prix de revient par rapport à celui des machines de conception classique.

Selon un autre perfectionnement de la présente machine, la brosse métallique circulaire 25, prévue dans celle-ci pour le nettoyage des dents du ruban de scie 15 à la sortie de la coupe, est montée de façon à obtenir une compensation automatique de l'usure de cette brosse. A cet effet, l'axe 26 de rotation de celle-ci est porté par un bras coudé 27 monté rotatif autour d'un axe 28 et soumis à la pression d'un ressort 29 tendant à maintenir cette brosse en pression contre le bord denté du ruban de scie 15. Cependant au lieu d'un ressort de rappel, il serait possible de prévoir un contre-poids. Dans l'exemple représenté à la figure 5, la brosse 25 est ainsi maintenue appliquée contre la face avant du volant d'entraînement 14a. Cependant cette brosse pourrait être disposée en tout autre point du parcours du ruban de scie. De plus, un voyant pourrait être prévu pour signaler l'usure complète de la brosse 25 en vue de son remplacement.

## Revendications

1. Machine à scier à ruban horizontal comportant un ensemble de travail (6) monté mobile dans le sens vertical par rapport à une table horizontale fixe (1) de réception de la pièce à scier (2), et comprenant deux parties latérales distinctes (6a, 6b) situées de part et d'autre de cette table (1) et faisant fonction de supports à deux volants verticaux (14a, 14b) d'entraînement et de renvoi du ruban (15) de scie dont le brin de travail (19) est disposé horizontalement au-dessus de l'emplacement de la pièce à scier (2), les deux parties latérales (6a,6b) étant reliées l'une à l'autre par une première traverse horizontale (13) s'étendant au-dessous de la table de réception (1), chaque partie latérale (6a, 6b) étant pour son déplacement associée à des moyens de guidage comprenant une colonne verticale (10) logée dans des paliers de guidage (11), caractérisée en ce que:

– les colonnes (10) font partie de cet ensemble mobile (6) et chaque colonne coulisse dans deux paliers (11) reliés l'un à l'autre par un fourreau (7) dont le pied est fixé sur la table (1) de travail,

– la première traverse horizontale (13) est solidarisée avec les extrémités inférieures des colonnes (10),

– une deuxième traverse horizontale (12) reliant l'une à l'autre les deux parties latérales (6a, 6b) de l'ensemble mobile de travail (6) est solidarisée avec les extrémités supérieures des colonnes (10), de façon que le châssis de cet ensemble constitue un premier cadre fermé.

2. Machine à scier selon la revendication 1, caractérisée en ce que les extrémités supérieures des fourreaux verticaux de guidage (7), portés par la table (1) de travail, sont solidarisées par une troisième traverse horizontale (8), et forme ainsi, avec les parties correspondantes de la traverse horizontale (8) et de la table de travail (1), un deuxième cadre fermé qui est fixe.

3. Machine à scier selon la revendication 1 ou 2, caractérisée en ce que le brin inférieur (21) du ruban de scie (15) est disposé sous la table (1) de travail et l'agencement est tel que le brin supérieur (19) de ce ruban en constitue le brin de travail disposé au-dessus de l'emplacement de la pièce à scier (2).

4. Machine à scier selon la revendication 2 ou 3, caractérisée en ce que la traverse horizontale (8), reliant les extrémités supérieures des fourreaux verticaux (7) de guidage, sert de support aux extrémités supérieures des mâchoires (23a, 23b) de l'étau d'immobilisation de la pièce à scier (2), les extrémités inférieures de ces mâchoires étant libres.

5. Machine à scier selon l'une des revendications précédentes, caractérisé en ce que les fourreaux verticaux de guidage (7) et les parties correspondantes des colonnes (10) solidaires de l'ensemble mobile de travail (6) sont agencés pour constituer des vérins hydrauliques aptes à commander les déplacements verticaux de l'ensemble mobile de travail (6), les colonnes verticales comportant chacune un épaulement (22) susceptible de jouer le rôle d'un piston.

6. Machine à scier selon l'une des revendications précédentes, caractérisée en ce que la brosse (25), prévue pour l'enlèvement des copeaux sur le ruban de scie (15), est portée par un support (27) monté pivotant autour d'un axe fixe (28) et soumis à l'action d'un organe de rappel (29) assurant la compensation d'usure de cette brosse.

**Patentansprüche**

1. Horizontale Bandsägemaschine mit einer Arbeitseinheit (6), die relativ zu einem festen horizontalen Maschinentisch (1) zur Aufnahme des zu sägenden Werkstücks (2) in vertikaler Richtung bewegbar montiert ist und zwei getrennte Seitenteile (6a, 6b) aufweist, die zu beiden Seiten des Maschinentisches (1) liegen und als Lager für zwei vertikal angeordnete Sägebandrollen (14a, 14b) zum Antreiben bzw. Umlenken des Bandsägeblatts (15) dienen, dessen Arbeitstrum (19) horizontal über dem Platz für das zu sägende Werkstück (2) angeordnet ist, wobei die beiden Seitenteile (6a, 6b) durch eine erste horizontale Traverse (13) miteinander verbunden sind, die unterhalb des Maschinentisches (1) verläuft, und wobei jedem Seitenteil (6a, 6b) Führungsmittel für seine Verschiebungsbewegung zugeordnet sind, die eine in Führungslagern (11) gelagerte vertikale Säule (10) umfassen, dadurch gekennzeichnet,

– daß die Säulen (10) Teil der beweglichen Arbeitseinheit (6) sind und jede Säule in zwei Lagern (11) gleitet, die durch eine Hülse (7) miteinander verbunden sind, deren Fuß auf dem Maschinentisch (1) befestigt ist,

– daß die erste horizontale Traverse (13) mit den unteren Enden der Säulen (10) fest verbunden ist,

– und daß eine zweite horizontale Traverse (12), die die beiden Seitenteile (6a, 6b) der beweglichen Arbeitseinheit (6) miteinander verbindet, mit den oberen Enden der Säulen (10) in der Weise fest verbunden ist, daß das Chassis der Arbeitseinheit einen ersten geschlossenen Rahmen bildet.

2. Bandsägemaschine nach Anspruch 1, dadurch gekennzeichnet, daß die beiden oberen Enden der von dem Maschinentisch (1) getragenen vertikalen Führungshülsen (7) durch eine dritte horizontale Traverse (8) fest miteinander verbunden sind und so zusammen mit den entsprechenden Teilen dieser horizontalen Traverse (8) einen feststehenden zweiten geschlossenen Rahmen bilden.

3. Bandsägemaschine nach Anspruch 1 oder 2, dadurch gekennzeichnet, daß das untere Trum (21) des Bandsägeblatts (15) unter dem Maschinentisch (1) angeordnet ist und daß die Anordnung so getroffen ist, daß das obere Trum des Bandsägeblatts (15) dessen Arbeitstrum bildet und über dem Platz für das zu sägende Werkstück (2) angeordnet ist.

4. Bandsägemaschine nach einem der Ansprüche 2 oder 3, dadurch gekennzeichnet, daß die horizontale Traverse (8), die die oberen Enden der vertikalen Führungshülsen (7) miteinander verbindet, als Lagerung für die oberen Enden der Spannbacken (23a, 23b) zum Einspannen des zu sägenden Werkstücks 82) dienen, wobei die unteren Enden der Spannbacken frei sind.

5. Bandsägemaschine nach einem der vorhergehenden Ansprüche, dadurch gekennzeichnet, daß die vertikalen Führungshülsen (7) und die entsprechenden Teile der Säulen (10), die mit der beweglichen Arbeitseinheit (6) fest verbunden sind, als hydraulische Winden für den Antrieb der Arbeitseinheit (6) ausgebildet sind, und daß jede der vertikalen Säulen eine Schulter (22) besitzt, die die Funktion eines Kolbens hat.

6. Bandsägemaschine nach einem der vorhergehenden Ansprüche, dadurch gekennzeichnet, daß die zum Entfernen der Sägespäne von dem Bandsägeblatt (15) vorgesehene Bürste (25) von einem Halter (27) getragen ist, der um eine feste Achse (28) schwenkbar montiert ist und der Einwirkung eines Rückstellorgans (29) unterworfen ist, das die Abnutzung der Bürste kompensiert.

**Claims**

1. A horizontal bandsaw machine comprising a working assembly (6) movably mounted in the vertical direction relatively to a fixed horizontal table (1) receiving the workpiece (2), and comprising two distinct lateral portions (6a, 6b) located on either side of said table (1) and constituting supports for two vertical flywheels (14a, 14b) driving and returning the sawband (15), the working strand (19) of which is disposed horizontally above the location of the workpiece (2), the two lateral portions (6a, 6b) being connected together by a first horizontal crosspiece (13) extending below the receiving table (1), each lateral portion (6a, 6b) being associated for its displacement with guide means comprising a vertical column (10) accomodated in guiding bearings (11), characterized in that :
   – the columns (10) form part of said movable assembly (6) and each column is slidable in two bearings (11) connected to each other by a sheath (7), the base of which is fixed to the working table (1),
   – the first horizontal crosspiece (13) is bound up with the lower ends of the columns (10),
   – a second horizontal crosspiece (12) connecting with each other the two lateral portions (6a, 6b) of the movable working assembly (6) is bound up with the upper ends of the columns (10), so that the frame of said assembly constitutes a first closed frame.

2. A bandsaw machine according to Claim 1, characterized in that the upper ends of the vertical guiding sheaths (7) carried by the working table (1) are bound up together by means of a third horizontal crosspiece (8) and are thus forming, together with the corresponding portions of the horizontal crosspiece (8) and of the working table (1), a second closed frame which is stationary.

3. A bandsaw machine according to Claim 1 or 2, characterized in that the lower strand (21) of the sawband (15) is disposed underneath the working table (1) and the arrangement is such that the upper strand (19) of said band constitutes the working strand thereof, disposed above the location of the workpiece (2) to be sawn.

4. A bandsaw machine according to Claim 2 or 3, characterized in that the horizontal crosspiece (8) linking the upper ends of the vertical guiding sheaths (7) serves as a support for the upper ends of the jaws (23a, 23b) of the vice provided for the immobilization of the workpiece (2), the lower ends of said jaws being free.

5. A bandsaw machine according to any of the above Claims, characterized in that the vertical guiding sheaths (7) and the corresponding portions of the columns (10) being bound up with the movable working assembly (6) are arranged so as to constitute hydraulic cylinders capable of controlling the vertical displacements of the movable working assembly (6), each vertical column comprising a shoulder (22) capable of acting as a piston.

6. A bandsaw machine according to any of the above Claims, characterized in that the brush (25) provided for the removal of scrap from the sawband (15) is carried by a support (27) being pivotally mounted about a stationary axis (28) and biased by a return member (29) for ensuring the compensation of the wear of said brush.

# Fig:1

Fig:2

# Fig. 3

Fig:4

Fig:5